# EUROPÄISCHE PATENTSCHRIFT

(11) **EP 0 513 592 B1**
(45) Veröffentlichungstag und Bekanntmachung des Hinweises auf die Patenterteilung: **13.07.1994**
(21) Anmeldenummer: 92107355.7
(22) Anmeldetag: 30.04.1992
(51) Int. Cl.: F16L 51/02

(54) **Faltenbalg aus elastomerem Werkstoff**
Bellows made of elastomeric material
Soufflet en matière élastomère

(30) Priorität: 11.05.1991 DE 4115446
(43) Veröffentlichungstag der Anmeldung: 19.11.1992
(73) Patentinhaber: Continental Aktiengesellschaft, 30165 Hannover (DE)
(72) Erfinder: Schmittmann, Heinrich, W-3138 Dannenberg (DE); Nouailles, Jean-Pierre, W-3000 Hannover 1 (DE)

(56) Entgegenhaltungen:
- CH-A- 615 261
- DE-B- 1 082 089

## Beschreibung

Die Erfindung betrifft einen Faltenbalg aus elastomerem Werkstoff gemäß dem Oberbegriff des Patentanspruchs 1.

Faltenbälge werden in großem Umfang zur dichtenden Kapselung des Übergangsbereichs zweier axial oder gelenkig miteinander verbundener Bauteile verwendet. Die Faltungen ihres Mittelteils ermöglichen sowohl axiale Längenänderungen als auch Biegungen quer zur Längsachse, so daß die verbundenen Bauteile in den gekapselten Verbindungsbereichen sowohl ihren Abstand als auch ihre Winkellage zueinander ändern können. Der geringstmögliche Abstand, den die beiden Bauteile dabei zueinander einnehmen können, ist durch die sogenannte "Blockhöhe" des Faltenbalges vorgegeben. die dann erreicht ist, wenn die Wandungen der Faltungsflanken durch das Zusammenschieben dicht gepackt unmittelbar aneinanderliegen.

Zur Fixierung an den besagten Bauteilen weisen die Faltenbälge an ihren freien Enden je einen Befestigungsteil auf, der im allgemeinen als zylindrischer Bund ausgebildet ist und mit Hilfe von ringförmigen Spannmitteln, wie z. B. Schlauchschellen, durch radiale Pressung an dem betreffenden Bauteil bzw. einem zwischengeschalteten Anschlußteil fixierbar ist. Eine andere Befestigungsart verzichtet auf besondere Spannmittel und erreicht eine Fixierung dadurch, daß der betreffende Befestigungsteil unter radialer Aufweitung auf einen vorzugsweise mit einer entsprechenden Aufnahmenut versehenen Anschlußstutzen aufgeschoben wird, dessen Außendurchmesser - gegebenenfalls auch in der Nut - größer ist als die ursprüngliche lichte Weite des Befestigungsteils, so daß dieser infolge seiner so erzeugten Vorspannung fest auf dem Anschlußstutzen aufsitzt.

Bei der letztgenannten, im Hinblick auf ihren geringen Montageaufwand sehr vorteilhaften Befestigungsart ergab sich in der Praxis ein störender Nachteil, wenn die betreffenden Faltenbälge in ihrem bestimmungsgemäßen Einsatz auf ihre sogenannte Blockhöhe zusammengeschoben wurden. Durch die radiale Aufweitung des Befestigungsbundes wurde nämlich die Wandung der dem Befestigungsbund benachbarten Faltungsflanke radial auswärts so gestaucht, daß in ihr Materialspannungen entstanden. Beim Zusammenschieben des Faltenbalges wurden diese Spannungen jeweils schlagartig überwunden, was jedes Mal mit einem deutlich hörbaren Schnapp- oder Knack-Geräusch verbunden war.

Es stellte sich daher die Aufgabe, einen Faltenbalg zu schaffen, die für die erwähnte schellenlose Befestigung geeignet war, ohne daß an ihr beim Zusammenschieben auf die Blockhöhe die vorstehend beschriebenen Schnapp- oder Knack-Geräusche auftraten.

Diese Aufgabe wird gelöst durch einen Faltenbalg mit den im kennzeichnenden Merkmalen des Anspruchs 1. Besonders vorteilhaft wirkt sich die vorliegende Erfindung an einem solchen Faltenbalg aus, der durch Blasformung aus einem thermoplastischen elastomeren Werkstoff gebildet ist.

Zur Erläuterung der vorliegenden Erfindung wird auf die beigefügte Prinzipzeichnung verwiesen, die einen Längsschnitt durch einen erfindungsgemäßen Faltenbalg wiedergibt.

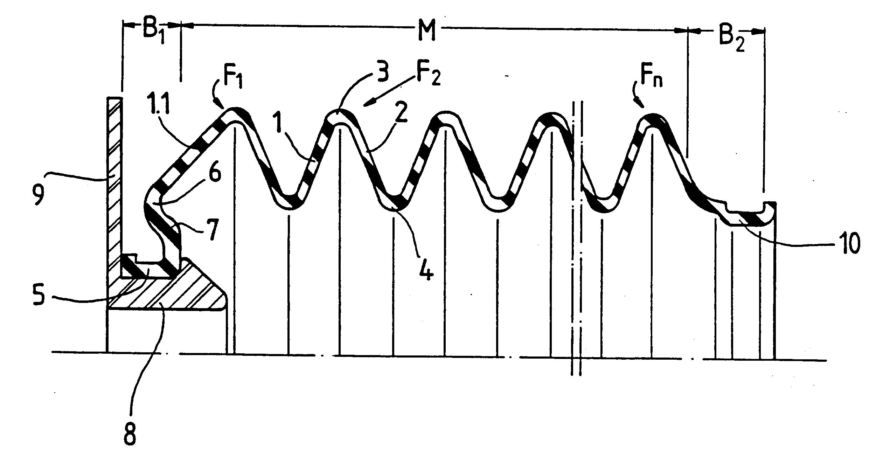

Der dargestellte Faltenbalg weist einen aus mehreren Faltungen F₁ bis Fₙ gebildeten Mittelteil M sowie an dessen beiden axialen Enden je einen Befestigungsteil B₁ und B₂ auf. Die Faltungen F₁ bis Fₙ des Mittelteils M sind aus axial entgegengesetzt orientierten, etwa hohlkegelstumpfförmigen Wandungsteilen **1** und **2** gebildet, die jeweils radial außen über den Faltungsscheitel **3** und radial innen über den Faltungsgrund **4** ineinander übergehen. Während der in der Zeichnung rechte Befestigungsteil B₂ für eine konventionelle Schellenbefestigung einen Bund **10** mit eingeformter Nut aufweist, ist der in der Zeichnung linke Befestigungsteil B₁ gemäß der vorliegenden Erfindung ausgebildet. Er weist einen etwa zylindrischen Bund **5** auf, der unter radialer Aufweitung auf den Stutzen **8** eines starren, beispielsweise aus einem thermoplastischen Kunststoff geformten Anschlußteils **9** aufgeschoben ist, auf dem er in einer entsprechenden umlaufenden Nut formschlüssig eingerastet ist, deren Außendurchmesser größer ist als die ursprüngliche lichte Weite des Bundes **5**.

Zwischen dem Bund **5** und der ihm zugewandten Flanke **1.1** der ihm benachbarten ersten Faltung F₁ des Mittelteils M ist die Balgwandung als Rollfalte **6** ausgebildet und verläuft im Längsschnitt etwa S-förmig, so daß die äußere Flanke der ersten Faltung F₁ in Richtung des Balgendes ringsum ausgebeult ist. Die sich durch das Aufweiten des Bundes **5** infolge der Materialstauchung ergebende Spannungszone entsteht bei dieser konstruktiven Gestaltung in dem durch die Bezugsziffer **7** gekennzeichneten Bereich, wo sich beim Zusammenschieben des Faltenbalges auf seine Blockhöhe keine Spannungsspitze ergibt, bei deren Überwindung es zu Schnapp- oder Knack-Geräuschen kommen könnte.

## Patentansprüche

1. Faltenbalg aus elastomerem Werkstoff. der einen aus mehreren Faltungen (F₁ bis Fₙ) gebildeten Mittelteil (M) sowie an dessen beiden axialen Enden je einen Befestigungsteil (B₁, B₂) aufweist, wobei die Faltungen (F₁ bis Fₙ) des Mittelteils (M) aus axial entgegengesetzt orientierten, hohlkegelstumpfförmigen Wandungsteilen (**1**, **2**) gebildet sind, die jeweils radial außen über den Faltungsscheitel (**3**) und radial innen über den Faltungsgrund (**4**) ineinander übergehen, und wobei wenigstens einer der beiden Befestigungsteile (B₁, B₂), der sich an die erste oder letzte Faltung (F₁, Fₙ) des Mittelteils (M) anschließt, als zylindrischer Bund (**5**) ausgebildet ist, der unter durch radiale Aufweitung erzeugter Vorspannung formschlüssig auf dem Stutzen (**8**) eines starren Anschlußteils (**9**) aufsitzt, **dadurch gekennzeichnet**, daß zwischen dem bundförmigen Befestigungsteil (**5**) und der ihm zugewandten Flanke (**1.1**) der ihm benachbarten Faltung (F₁ oder Fₙ) des Mittelteils (M) ein als Rollfalte (**6**) ausgebildeter, im Längsschnitt S-förmiger Wandungsteil vorgesehen ist.

2. Faltenbalg nach Anspruch 1, **dadurch gekennzeichnet**, daß er durch Blasformung aus einem thermoplastischen elastomeren Werkstoff gebildet ist.

## Claims

1. Bellows formed from elastomeric material, which bellows has a central portion (M), formed from a plurality of folds (F₁ to Fₙ), and a respective securing member (B₁, B₂) at each of the two axial ends thereof, the folds (F₁ to Fₙ) of the central portion (M) being formed from hollow-frustoconical wall members (1, 2), which are axially orientated in opposite directions and extend into one another radially externally via the top (3) of the fold and radially internally via the bottom (4) of the fold, and at least one of the two securing members (B₁, B₂), which communicates with the first or last fold (F₁, Fₙ) of the central portion (M), being in the form of a cylindrical shoulder (5), which rests on the connection (8) of a rigid connection-piece (9) in a form-locking manner as a result of initial tension produced by radial expansion, characterised in that a wall member, which is in the form of roller fold (6) and has an S-shaped longitudinal section, is provided between the shoulder-like securing member (5) and the flank (1.1), facing said securing member, of the fold (F₁ or Fₙ), adjacent said securing member, of the central portion (M).

2. Bellows according to claim 1, characterised in that it is formed by being blow-moulded from a thermoplastic elastomeric material.

## Revendications

1. Soufflet en matière élastomère, qui comporte une partie centrale (M) formée par plusieurs plis (F₁ à Fₙ) ainsi qu'une partie de fixation (B₁, B₂) à chacune des deux extrémités axiales, dans lequel les plis (F₁ à Fₙ) de la partie centrale (M) sont formés par des parties de paroi (1, 2) en forme de troncs de cône creux, orientées dans un sens opposé axialement, qui se prolongent l'une l'autre à l'extérieur radialement, par le sommet des plis (3) et à l'intérieur radialement, par le fond des plis (4), et dans lequel l'une au moins des deux parties de fixation (B₁, B₂), qui se raccordent au premier ou au dernier pli (F₁ à Fₙ) de la partie centrale (M), est un épaulement (5) cylindrique, qui repose, par concordance de forme, sous une précontrainte produite par un élargissement radial, sur la tubulure (8) d'un raccord (9) rigide, caractérisé en ce qu'il est prévu, entre la partie de fixation (5) en forme d'épaulement et le flanc (1.1) tourné vers celle-ci du pli (F₁ ou Fₙ) voisin de la partie centrale (M), une partie de paroi en S en coupe longitudinale, se présentant sous la forme d'un pli roulé (6).

2. Soufflet selon la revendication 1, caractérisé en ce qu'il est formé par soufflage d'une matière élastomère thermoplastique.
